# EUROPÄISCHE PATENTANMELDUNG

(11) **EP 1 582 465 A2**
(43) Veröffentlichungstag der Anmeldung: **05.10.2005**
(21) Anmeldenummer: 05006531.7
(22) Anmeldetag: 24.03.2005
(51) Int. Cl.: B65B 35/50, B65B 9/20, B65B 39/00

(54) **Vertikale Schlauchbeutelmaschine zum Abpacken von Stapeln aufeinandergelegter Gegenstände**

(30) Priorität: 03.04.2004 DE 102004016498
(71) Anmelder: ROVEMA VERPACKUNGSMASCHINEN GMBH, 35463 Fernwald (DE)
(72) Erfinder: Kuss, Gerhard, 35584 Wetzlar (DE); Nicolai, Torsten, 35418 Buseck (DE); Birnstil, Carsten, 35418 Buseck (DE); Baur, Walter, Dr., 63584 Gründau (DE)

(57) **Zusammenfassung**

Um mit einer vertikalen Schlauchbeutelmaschine (1) mit einer Befüllstation (7) oberhalb eines Füllrohres (6) ein zuverlässiges Abpacken von gestapelten Gegenständen (18) in Schlauchbeutel (16) zu erreichen, wird vorgeschlagen, dass die Befüllstation (7) zur Abgabe jeweils eines Stapels (37) aufeinandergelegter Gegenstandsgruppen (23) vorgesehen ist, wobei jede Gegenstandsgruppe (23) aus mindestens zwei sich teilweise überlappenden Gegenständen (18) gebildet wird.

## Beschreibung

Anmeldegegenstand ist eine vertikale Schlauchbeutelmaschine mit einer von einer Vorratsrolle abgewickelten Folienbahn. Eine derartige Maschine weist eine Formschulter mit einer stetigen und kontinuierlich gekrümmten Umlenkkante zum Umformen der Folienbahn zu einem Folienschlauch auf, und ein vertikal ausgerichtetes Füllrohr, welches den Folienschlauch aufnimmt und durch das eine Befüllung des Folienschlauches möglich ist. Eine Befüllstation mit abzupackenden Gegenständen oberhalb des Füllrohres dient dieser Befüllung. Zwei von gegenüberliegenden Seiten des Füllrohres gegen den Folienschlauch und damit gegen das Füllrohr wirkende Folienabzüge sind zum Weitertransportieren der Folienbahn und des Folienschlauches vorgesehen. Eine Längssiegeleinrichtung dient zum Verschweißen des Folienschlauches mittels einer in Transportrichtung ausgerichteten Längsnaht und eine Quersiegeleinrichtung mit zwei gegeneinander beweglichen, den Folienschlauch quer verschweißenden Schweißbacken zum Erzeugen von Kopfnähten und Bodennähten von Schlauchbeuteln. Mittels einer Trenneinrichtung werden die fertiggestellten Schlauchbeutel vom Folienschlauch abgetrennt.

Derartige vertikale Schlauchbeutelmaschinen sind hinlänglich bekannt. Sie dienen in der Regel zum Abpacken fließfähiger oder riesenfähiger Produkte, wie z. B. Granulate. Prinzipiell kann auch stückiges Produkt verpackt werden.

Die bekannten vertikalen Schlauchbeutelmaschinen haben den Nachteil, dass sie zum Abpacken von Stapeln aufeinandergelegter Gegenstände nicht geeignet sind, da sich die Gegenstände während ihres freien Falls im Füllrohr drehen und somit unkontrollierbar im verschweißten Ende des Folienschlauches landen können.

Wegen dieser Fallproblematik werden vertikale Stapel aus aufeinandergelegten Gegenständen im Regelfall nicht mittels vertikaler Schlauchbeutelmaschinen verpackt. Statt dessen werden diese Gegenstände in zuvor erzeugte, standfähige Leerbeutel hinein gestapelt, was vergleichsweise aufwändig und damit teuer ist, da zum Erzeugen der Leerbeutel eine vertikale Schlauchbeutelmaschine genutzt wird und dieser eine Befüllstation nachgeordnet wird.

Der Erfindung liegt die Aufgabe zu Grunde, eine vertikale Schlauchbeutelmaschine derart auszuführen, dass sie zum Abpacken von Gegenstandsgruppen, die einen Stapel im Schlauchbeutel bilden sollen, genutzt werden kann.

Gelöst ist die Aufgabe gemäß dem kennzeichnenden Teil des Anspruchs 1. Danach ist die Befüllstation zur Abgabe jeweils eines Stapels aufeinandergelegter Gegenstandsgruppen vorgesehen, wobei jede Gegenstandsgruppe aus mindestens zwei sich teilweise überlappenden Gegenständen gebildet wird. Dabei ist unter dem Begriff "Gegenstandsgruppe" eine Gruppe von zwei oder mehr in horizontaler Richtung direkt nebeneinander angeordneter Gegenstände (wie z. B. Kaffeepads) gemeint.

Die vorgeschlagene Schlauchbeutelmaschine hat den Vorteil, dass sie zum Abpacken eines vertikalen Gegenstandsstapels geeignet ist. Da zwei oder mehr Gegenstände eine horizontal ausgerichtete Gegenstandsgruppe bilden, so werden zwei oder mehr derartige Stapel, welche ineinander verhakt sind und sich deshalb gegenseitig stützen, nebeneinander in einen Schlauchbeutel gefüllt. Dabei spielt es keine Rolle, ob ein Stapel in einem einzigen Fallvorgang oder aber mittels zweier oder dreier nacheinander ausgeführter Füllvorgänge, bei denen jeweils Teilstapel an die Befüllstation und von dort in das Füllrohr gebracht wird, in den Beutel gelangt. Ein Stapel fällt sicher durch das Füllrohr, da er in sich stabilisiert wird, bis er im unteren Ende des Folienschlauches landet. Das Füllrohr kann dabei den mehreren, nebeneinander durch das Füllrohr fallenden Einzelstapel angepasst werden.

Weitere, vorteilhafte Ausgestaltungen der vorgeschlagenen Schlauchbeutelmaschine sind in den Ansprüchen 2 und 3 beschrieben.

Sind gemäß Anspruch 2 die Gegenstände rund und weisen sie einen umlaufenden, flachen Rand auf, so können sie vergleichsweise gut mittels ihrer Ränder überlappt werden, um einen stabilen Stapel oder aufeinander zu stapelnde Teilstapel zu bilden. Derartigen Gegenständen genügt eine Füllrohrausgestaltung, bei der zwei Wände des Füllrohres, die einander gegenüber liegen, und die nicht zum Angreifen der Folienabzüge vorgesehen sind, jeweils mindestens zwei nach außen gerichtete Knickungen aufweisen (Anspruch 3). Dabei begünstigen jeweils zwei Knickungen an einer vorderen Wand und einer hinteren Wand des Füllrohres den Fall einer aus zwei Gegenständen gebildeten Gegenstandsgruppe (zwei Einzelstapel nebeneinander). Für jeweils drei Gegenstände einer Gegenstandsgruppe wäre ein andersartig geknicktes Füllrohr hinsichtlich seines Befüllquerschnittes zu bevorzugen.

Im folgenden wird die Erfindung an Hand Ausführungsbeispiele darstellender Figuren näher beschrieben. Es zeigt:
- Figur 1: in einer Seitenansicht eine vertikale Schlauchbeutelmaschine mit einer Befüllstation oberhalb eines vertikalen Füllrohres, um einen Stapel Gegenstandsgruppen oberhalb des Füllrohres zu platzieren und danach in einem Schlauchbeutel abzuwerfen;
- Figur 2: in einer Ansicht von vorne eine Formschulter und das Füllrohr der Schlauchbeutelmaschine der Figur 1;
- Figur 3: in einem Schnitt entlang A-A der Figur 1 eine zuvor frei im Füllrohr fallende, oberste Gegenstandsgruppe, die aus zwei sich teilweise überlappenden Gegenständen gebildet wird, wobei der Füllrohrquerschnitt dieser Gegenstandsgruppe geometrisch angepasst ist, und die Gegenstandsgruppe die oberste in einem Stapel ist;
- Figur 4: in einer Schnittdarstellung ein Objekt analog Figur 3, jedoch zusätzlich mit vier Auslenkblechen am Füllrohr, um Beutel mit stabilisierten, verschweißten Vertikalkanten herstellen zu können;
- Figur 5: in einer Seitenansicht einen zu stapelnden Gegenstand, sowie
- Figur 6: in einer Seitenansicht einen Stapel, der aus aufeinandergelegten, jeweils zwei Gegenstände umfassenden Gegenstandsgruppen gebildet ist, und den es zu verpacken gilt.

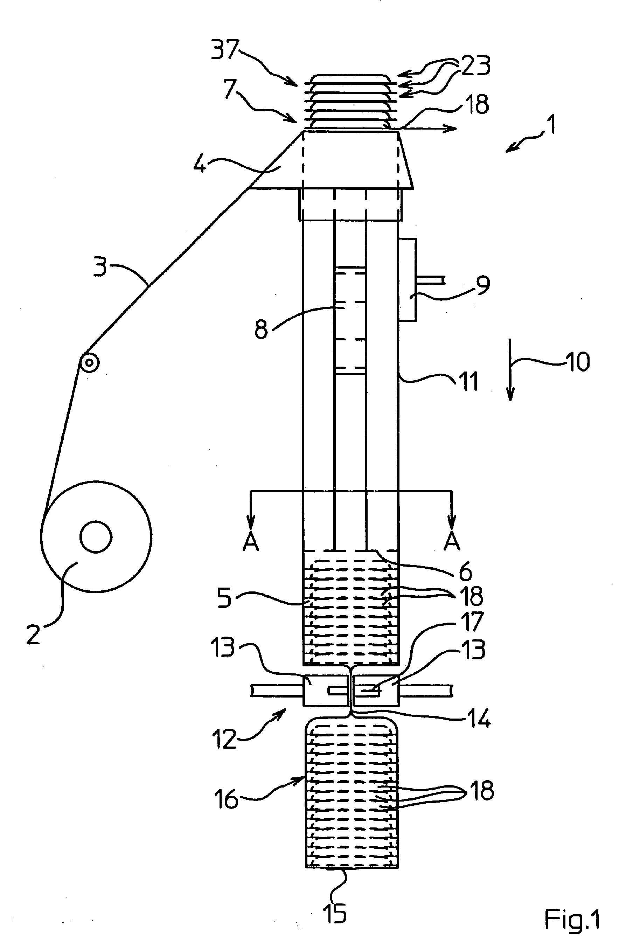

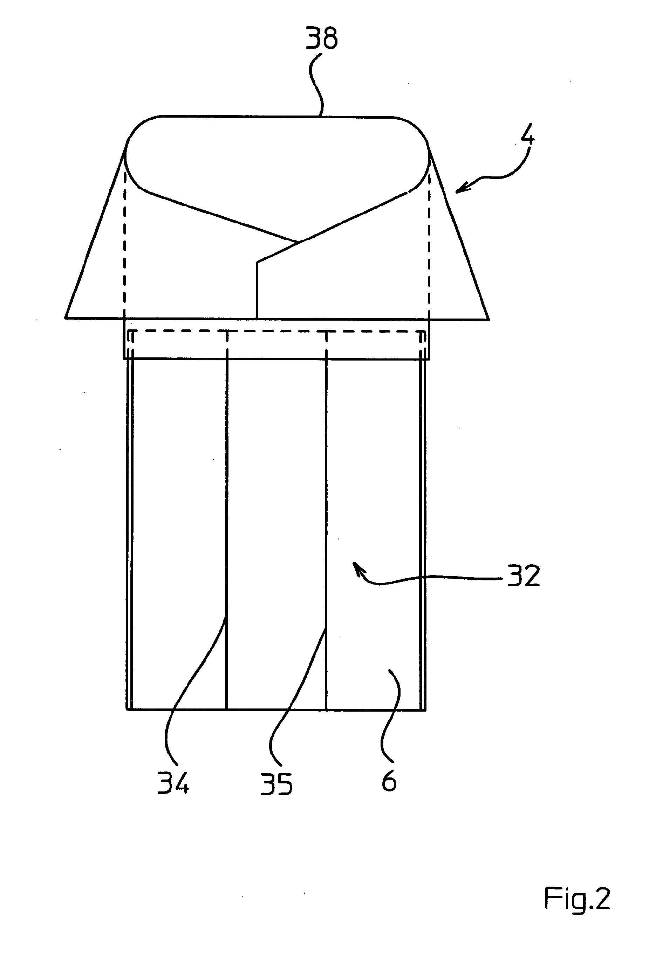

Bei einer vertikalen Schlauchbeutelmaschine 1 mit einer von einer Vorratsrolle 2 abgewickelten Folienbahn 3 dient eine Formschulter 4 mit einer Umlenkkante 38 (Figur 2) zum Umformen der Folienbahn 3 zu einem Folienschlauch 5 (Figur 1). Ein vertikal ausgerichtetes Füllrohr 6 nimmt den Folienschlauch 5 auf und dient zur Befüllung des Folienschlauches 5 mittels einer Befüllstation 7 oberhalb des Füllrohres 6. Zwei von gegenüberliegenden Seiten des Füllrohres 6 gegen den Folienschlauch 5 und damit gegen das Füllrohr 6 wirkende Folienabzüge 8 sind zum Weitertransportieren der Folienbahn 3 und des Folienschlauches 5 vorgesehen. Eine Längssiegeleinrichtung 9 dient zum Verschweißen des Folienschlauches 5 mittels einer in Transportrichtung 10 ausgerichteten Längsnaht 11. Eine Quersiegeleinrichtung 12 mit zwei gegeneinander beweglichen, den Folienschlauch 5 quer verschweißenden Schweißbacken 13 ist zum Erzeugen von Kopfnähten 14 und Bodennähten 15 von Schlauchbeuteln 16 vorgesehen. Eine Trenneinrichtung 17 trennt die Schlauchbeutel 16 vom Folienschlauch 5 ab.

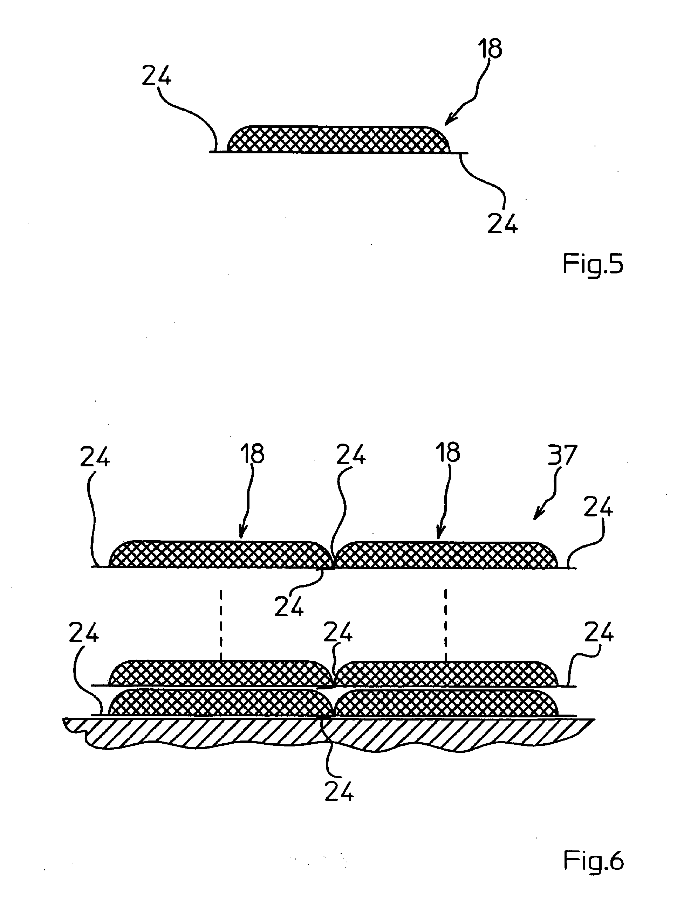

Die Befüllstation 7 ist zur Abgabe jeweils eines Stapels 37 aufeinandergelegter Gegenstandsgruppen 23 vorgesehen, wobei jede Gegenstandsgruppe 23 aus mindestens zwei sich teilweise überlappenden Gegenständen 18 gebildet wird. Die Gegenstände 18 sind rund (Figur 5) und weisen einen umlaufenden, flachen Rand 24 auf, welcher am benachbarten Gegenstand 18 angelegt wird (Figur 6), um einen kompakten Stapel 37 zu erhalten.

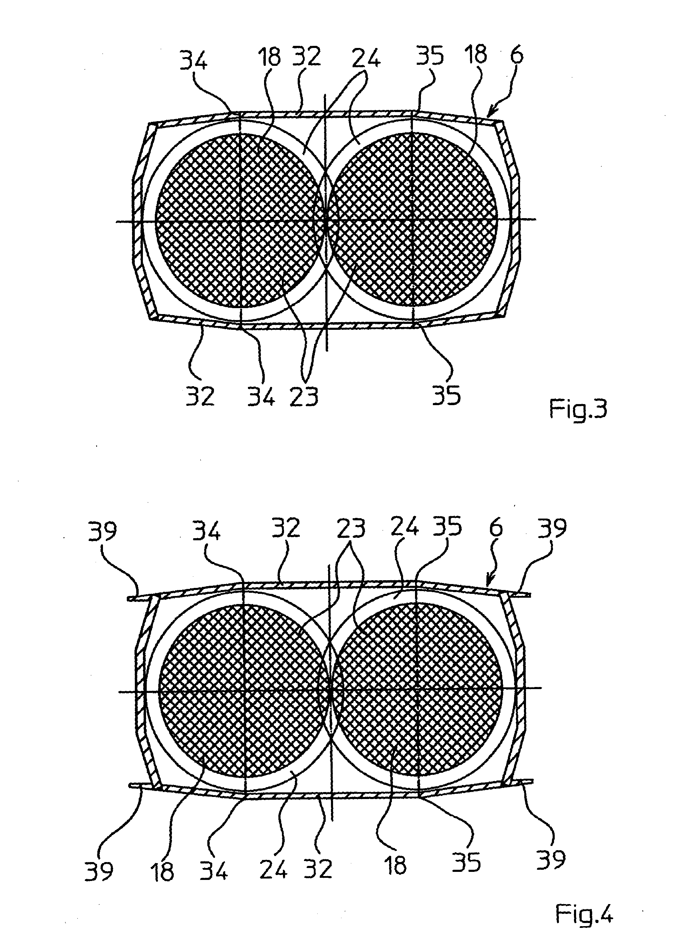

Das Füllrohr 6 ist bezüglich seines Querschnittes an die horizontalen Abmessungen der Gegenstandsgruppe 23 angepasst (Figur 3), umeinen günstigen Fall zu erreichen, die dem der Stapel 37 während seines Falls kompakt bleibt. Ein sicheres Fallen und ein kompaktes Ankommen des Stapels 37 im unteren Ende des Folienschlauches 5 wird insbesondere dadurch erreicht, dass der Stapel 37 durch die mittels ihrer Ränder 24 ineinander verhakten Gegenstände 18 (Kaffeepads) und die doppelte Stapelformation stabilisiert ist. Prinzipiell ist der Stapel 37 aus zwei ineinanderverhakten Einzelstapeln gebildet.

Die Wände 32 des Füllrohres 6, die einander gegenüber liegen, und die nicht zum Angreifen der Folienabzüge 18 vorgesehen sind, weisen eine nach außen gerichtete Knickung 34 (Figur 7) oder zwei nach außen gerichtete Knickungen 34, 35 auf (Figur 3).

Am Füllrohr 6 könnten auch Auslenkbleche 39 vorgesehen sein (Figur 4), um jeweils einen Stapel 37 in einen Schlauchbeutel 16 abzupacken, wobei der Schlauchbeutel 16 in bekannter Weise (EP 0 627 355 A) vier stabilisierte, vertikal ausgerichtete Kanten (die nachfolgend verschweißt würden) erhielt.
- 1: Schlauchbeutelmaschine
- 2: Vorratsrolle
- 3: Folienbahn
- 4: Formschulter
- 5: Folienschlauch
- 6: Füllrohr
- 7: Befüllstation
- 8: Folienabzug
- 9: Längssiegeleinrichtung
- 10: Transportrichtung
- 11: Längsnaht
- 12: Quersiegeleinrichtung
- 13: Schweißbacke
- 14: Kopfnaht
- 15: Bodennaht
- 16: Schlauchbeutel
- 17: Trenneinrichtung
- 18: Gegenstand
- 23: Gegenstandsgruppe
- 24: äußerer Rand
- 32: Wand
- 34, 35: Knickung
- 37: Stapel
- 38: Umlenkkante
- 39: Auslenkblech

## Patentansprüche

1. Vertikale Schlauchbeutelmaschine (1) mit einer von einer Vorratsrolle (2) abgewickelten Folienbahn (3), einer Formschulter (4) mit einer stetigen und kontinuierlich gekrümmten Umlenkkante (38) zum Umformen der Folienbahn (3) zu einem Folienschlauch (5), einem vertikal ausgerichteten Füllrohr (6), welches den Folienschlauch (5) aufnimmt und durch das eine Befüllung des Folienschlauches (5) möglich ist, einer Befüllstation (7) mit abzupackenden Gegenständen (18) oberhalb des Füllrohres (6), zwei von gegenüberliegenden Seiten des Füllrohres (6) gegen den Folienschlauch (5) und damit gegen das Füllrohr (6) wirkenden Folienabzügen (8) zum Weitertransportieren der Folienbahn (3) und des Folienschlauches (5), einer Längssiegeleinrichtung (9) zum Verschweißen des Folienschlauches (5) mittels einer in Transportrichtung (10) ausgerichteten Längsnaht (11), einer Quersiegeleinrichtung (12) mit zwei gegeneinander beweglichen, den Folienschlauch (5) quer verschweißenden Schweißbacken (13) zum Erzeugen von Köpfnähten (14) und Bodennähten (15) von Schlauchbeuteln (16), sowie einer Trenneinrichtung (17) zum Abtrennen der Schlauchbeutel (16) vom Folienschlauch (5), **dadurch gekennzeichnet, dass** die Befüllstation (7) zur Abgabe jeweils eines Stapels (37) aufeinandergelegter Gegenstandsgruppen (23) vorgesehen ist, wobei jede Gegenstandsgruppe (23) aus mindestens zwei sich teilweise überlappenden Gegenständen (18) gebildet wird.

2. Schlauchbeutelmaschine nach Anspruch 1, **dadurch gekennzeichnet, dass** die Gegenstände (18) rund sind und einen umlaufenden, flachen Rand (24) aufweisen.

3. Schlauchbeutelmaschine nach Anspruch 2, **dadurch gekennzeichnet, dass** zwei Wände (32) des Füllrohres (6), die einander gegenüber liegen, und die nicht zum Angreifen der Folienabzüge (8) vorgesehen sind, jeweils mindestens zwei nach außen gerichtete Knickungen (34, 35) aufweisen.
